Europäisches Patentamt

European Patent Office

Office européen des brevets

(19)

(11) Numéro de publication : **0 013 318**
**B1**

(12) # FASCICULE DE BREVET EUROPÉEN

(45) Date de publication du fascicule du brevet :
07.04.82

(21) Numéro de dépôt : 79104591.7

(22) Date de dépôt : 19.11.79

(51) Int. Cl.³ : **H 05 K 7/18, G 06 F 3/00**

(54) **Terminal d'entrée de données à configuration modifiable.**

(30) Priorité : 03.01.79 US 745

(43) Date de publication de la demande :
23.07.80 (Bulletin 80/15)

(45) Mention de la délivrance du brevet :
07.04.82 Bulletin 82/14

(84) Etats contractants désignés :
**DE FR GB**

(56) Documents cités :
**DE - A - 2 505 229**
**FR - A - 2 092 284**

(73) Titulaire : **International Business Machines Corpora-tion**

**Armonk, N.Y. 10504 (US)**

(72) Inventeur : **Kekas, Dennis Harry**
**3425 Horton Street**
**Raleigh, NC 27607 (US)**
Inventeur : **Lynch, Robert Carlton**
**302 East Maynard Road**
**Cary, NC 27511 (US)**
Inventeur : **Mathewson, James Alfred**
**4644 Grinding Stone Drive**
**Raleigh, NC 27604 (US)**
Inventeur : **McAdams, Ronald Prestly**
**5104 New Bern Avenue**
**Raleigh, NC 27610 (US)**
Inventeur : **Pasterchick, Harry Jr.**
**707 Kildaire Farm Road**
**Cary, NC 27511 (US)**

(74) Mandataire : **Bonneau, Gérard**
**COMPAGNIE IBM FRANCE Département de Propriété Industrielle**
**F-06610 La Gaude (FR)**

Imprimerie Jouve, 18, rue St-Denis, 75001 Paris, France

Terminal d'entrée de données à configuration modifiable

## Description

### Domaine Technique

La présente invention concerne d'une façon générale les systèmes de traitement de données et, plus particulièrement, un terminal d'entrée de données dont la configuration peut être aisément modifiée sans avoir à utiliser d'outils.

### Etat de la Technique Antérieure

Les terminaux d'entrée de données destinés à être utilisés dans certains milieux tels que des supermarchés ou des magasins, présentent généralement l'une ou l'autre de deux configurations, à savoir une première configuration dans laquelle tous les composants du terminal (clavier, dispositif d'affichage, circuits électroniques, etc.) sont groupés et réunis dans un même carter ou sont à tout le moins connectés les uns aux autres de manière à constituer une seule unité, et une deuxième configuration dans laquelle ces différents composants sont situés en différents lieux en fonction des besoins particuliers de l'utilisateur du terminal.

Cela présente un certain nombre d'inconvénients évidents. En effet, deux produits différents doivent être mis au point par le fabricant, et il est nécessaire de constituer un stock de pièces détachées pour chaque type de terminal et d'assurer une double formation du personnel chargé de la maintenance.

Certains fabricants ont cherché à résoudre ce problème en ne proposant à leurs clients que la deuxième configuration, les clients désirant la première configuration pouvant réaliser celle-ci en réunissant simplement les différents composants du terminal en un même lieu. Cette solution, bien qu'elle permette de résoudre certains des problèmes du fabricant, peut se révéler insatisfaisante du point de vue du client. En effet, si les différents composants du terminal sont simplement réunis en un même lieu, l'ensemble ainsi réalisé peut être inesthétique, et par conséquent, dans le cas d'applications intéressant des supermarchés et des magasins, indésirable. D'autre part, dans certains types de magasins (et particulièrement dans le cas des supermarchés), l'opérateur du terminal est appelé à se déplacer constamment autour de celui-ci pour manipuler différents articles, recevoir de l'argent, rendre la monnaie, etc... Au cours de ces activités, il peut arriver qu'un clavier séparé du terminal proprement dit soit déplacé par inadvertance, ce qui peut entraîner l'introduction de données incorrectes, compte tenu du fait que dans de nombreux cas l'opérateur utilise le clavier sans contrôle visuel. Il peut également arriver que le clavier tombe par terre et soit endommagé.

## Exposé de l'Invention

La présente invention concerne un terminal d'entrée de données qui permet de résoudre les problèmes évoqués ci-dessus. On peut aisément modifier la configuration d'un terminal réalisé conformément à la présente invention de telle sorte qu'elle corresponde à l'une ou l'autre des configurations précédemment mentionnées, le clavier étant fixé à la base de la machine dans le cas de la première configuration. Les opérations d'assemblage et de conversion sont effectuées sans qu'il y ait lieu d'utiliser d'outil ou de dispositif de fixation distinct.

Dans la réalisation préférée de l'invention, le terminal d'entrée de données comprend un clavier monté dans un boîtier comportant sur sa surface extérieure des éléments de guidage, et un connecteur électrique relié aux circuits électriques permettant la transmission de signaux correspondant aux données introduites par l'opérateur au moyen des touches du clavier. Le terminal comprend également une base pourvue d'éléments de guidage complémentaires de ceux du clavier et des circuits électriques qui se terminent par un connecteur électrique complémentaire de celui du clavier. Selon la configuration choisie, le clavier peut être fixé à la base du terminal au moyen desdits éléments de guidage complémentaires, les connecteurs se trouvant alors en contrat direct l'un avec l'autre ; ou être séparé de la base pour constituer une unité séparée, les connecteurs étant alors couplés électriquement par l'intermédiaire d'un câble auxiliaire.

### Brève Description des Figures

La figure 1 est une vue en perspective d'un terminal d'entrée de données réalisé conformément à la présente invention, la configuration de ce terminal étant celle dans laquelle tous les composants de celui-ci sont réunis en une même unité.

La figure 2 est une vue en perspective d'une partie de la base du terminal de la figure 1 et montre de façon plus détaillée les éléments de guidage et le connecteur.

La figure 3 est une vue de dessus d'une partie du clavier du terminal de la figure 1.

La figure 4 est une vue latérale de la partie arrière du clavier.

La figure 5 est une vue en perspective arrière du carter du terminal, lorsque celui-ci se trouve dans la configuration dans laquelle ses différents composants ne sont pas groupés, une partie dudit carter étant découpée de manière à permettre de voir certains détails du connecteur.

La figure 6 est une vue en perspective d'un cache utilisé en conjonction avec le carter représenté sur la figure 5.

La figure 7 est un agrandissement du connecteur associé à la base du terminal.

Mode de Réalisation Préféré de l'Invention

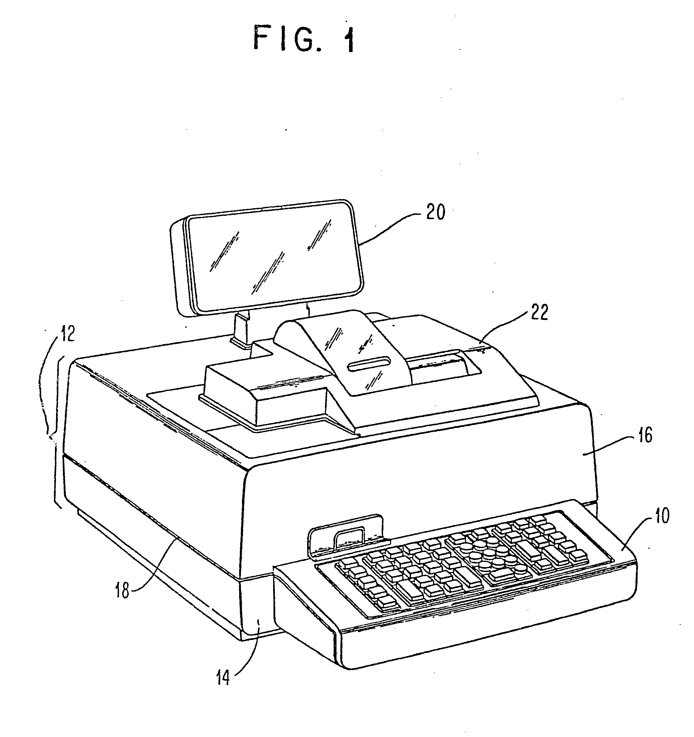

On a représenté sur la figure 1 un terminal d'entrée de données réalisé conformément à la présente invention et dont la configuration est celle dans laquelle tous les différents composants du terminal sont groupés. Dans cette première configuration, un clavier 10 est fixé à un carter 12 comprenant une base 14 et un châssis 16. Ce dernier repose sur un épaulement 18 du bord supérieur de la base 14, qui s'étend vers l'intérieur de la machine. L'extrémité intérieure dudit épaulement comporte un rebord qui s'étend vers le haut et qui est invisible de l'extérieur de la machine ; l'objet de ce rebord est d'empêcher tout déplacement du châssis 16 par rapport à la base 14.

Le châssis 16 peut également soutenir un dispositif d'affichage 20 servant à afficher les données introduites dans le terminal par l'opérateur au moyen du clavier afin qu'il puisse les contrôler visuellement. Un capot 22 permet à l'opérateur d'accéder à une ou plusieurs stations d'impression que comporte le terminal et qui servent à imprimer des reçus destinés aux clients, à enregistrer des transactions sur une bande de papier, etc...

Bien que, dans ladite configuration, le clavier 10 semble être solidaire du carter 12, il peut aisément être détaché de ce dernier sans avoir à utiliser d'outils une fois le châssis 16 soulevé de manière à dégager la paroi avant de la base 14.

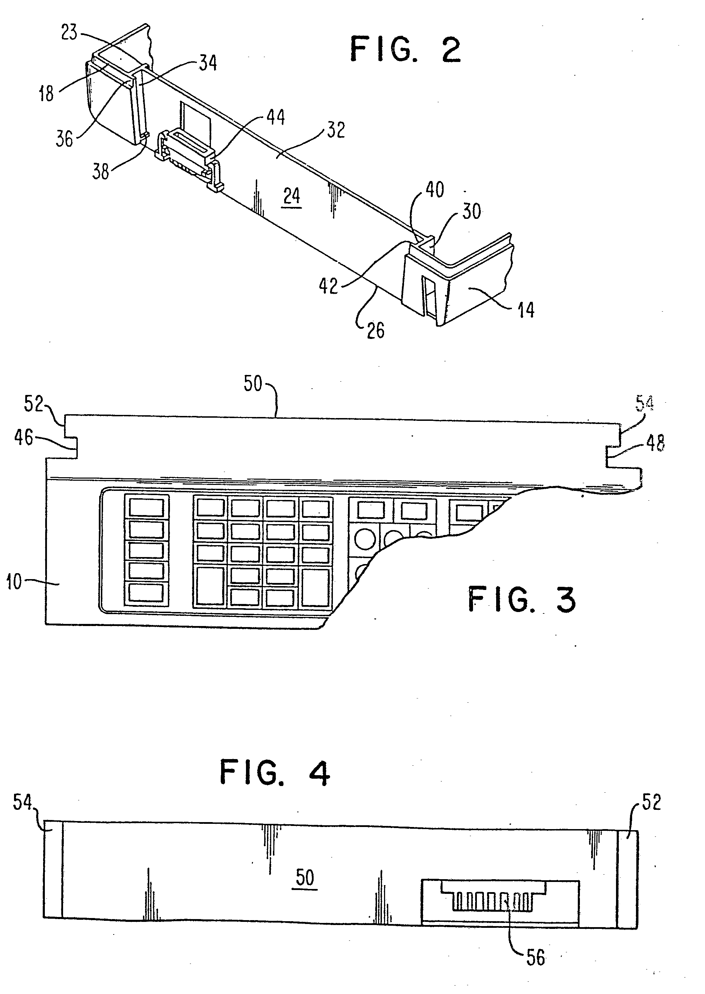

A cette fin, le clavier 10 et la base 14 sont pourvus d'éléments de guidage à interverrouillage et de connecteurs complémentaires qui sont mutuellement alignés. La figure 2 représente les éléments de guidage et le connecteur électrique que comporte la base, une fois que le châssis 16 et le clavier 10 ont été retirés. La paroi avant de la base 14 comporte une partie en retrait 24 de forme rectangulaire qui s'étend du bord supérieur 18 de la base 14 jusqu'au bord inférieur 26 de celle-ci qui est définie, en partie, par les bords 23 et 30 d'une paroi intérieure 32, laquelle est parallèle à la paroi extérieure de la base 14. La paroi avant de la base 14 comprend un élément transversal 34 constituant un pont entre la paroi extérieure de la base 14 et la paroi intérieure 32. La paroi extérieure comprend une nervure 36 qui, combinée avec la paroi intérieure 32, définit un évidement au niveau de l'élément 34. L'extrémité inférieure de cet évidement comporte un épaulement 38.

De même, le bord 30 comprend un évidement défini par un panneau transversal 40 et par une nervure 42 que comporte la paroi extérieure de la base 14. Un épaulement (non représenté) analogue à l'épaulement 38 est situé sur le bord inférieur de cet évidement.

La paroi intérieure 32, au niveau du bord inférieur de cet évidement, comporte un connecteur électrique femelle 44. Ce connecteur est destiné à recevoir un câble provenant des circuits électroniques situés à l'intérieur du carter 12 du terminal. Ainsi qu'on le verra plus loin, le connecteur 44 est conçu de manière à pouvoir se déplacer librement dans certaines limites de manière à faciliter l'insertion d'un connecteur électrique associé au clavier 12 du terminal.

La paroi de la base forme, au niveau des bords 23 et 30, des éléments de guidage verticaux destinés à permettre la mise en place du clavier 12, lorsqu'on désire obtenir la première configuration, dans laquelle les différents composants du terminal sont groupés. Le clavier 10 comporte un connecteur électrique mâle 56, représenté sur la figure 4, qui est inséré dans le connecteur 44 dans le cas de cette première configuration. Comme le montre la figure 3, le clavier 10 comprend des éléments de guidage complémentaires de ceux qui sont formés aux extrémités opposées de la partie en retrait 24. De façon plus précise, les bords gauche et droit du clavier 10 sont respectivement pourvus d'évidements 46 et 48 à proximité immédiate de la paroi arrière 50 du clavier. L'évidement 46 est partiellement défini par une avancée rectangulaire 52 dont la forme et les dimensions sont complémentaires de celles de l'évidement défini par la nervure 36, le panneau 34 et la paroi intérieure 32 de la base 14. L'évidement 46 est en outre complémentaire de la nervure 36. L'évidement 48 et l'avancée rectangulaire 54 que comporte l'extrémité droite du clavier 10 sont complémentaires du guide constitué par la nervure 42, le panneau 40 et la paroi intérieure 32.

Pour fixer le clavier 10 au carter 12, il est nécessaire de retirer le châssis 16 ou du moins de l'écarter de la paroi avant de la base 14 de manière à exposer le bord supérieur de la partie en retrait 24. Le clavier 10 est ensuite mis en place en l'abaissant de telle sorte que les éléments de guidage complémentaires assurent son alignement par rapport à la base 14 et limitent son mouvement par rapport à cette dernière.

Lors de la mise en place du clavier, le connecteur mâle 56 qu'il comporte pénètre (automatiquement) dans le connecteur 44 de la base, assurant ainsi la liaison électrique entre les circuits du clavier et ceux du terminal qui sont logés dans le carter 12. Les surfaces inférieures des avancées 52 et 54 que comporte le clavier 10 reposent sur l'épaulement 38 et sur l'épaulement correspondant que comporte le bord droit de la partie en retrait 24. Les éléments de guidage à interverrouillage permettent de limiter le mouvement horizontal du clavier 10. Celui-ci ne peut pas se déplacer vers le haut une fois que le châssis 16, qui le recouvre partiellement, a été remis en place.

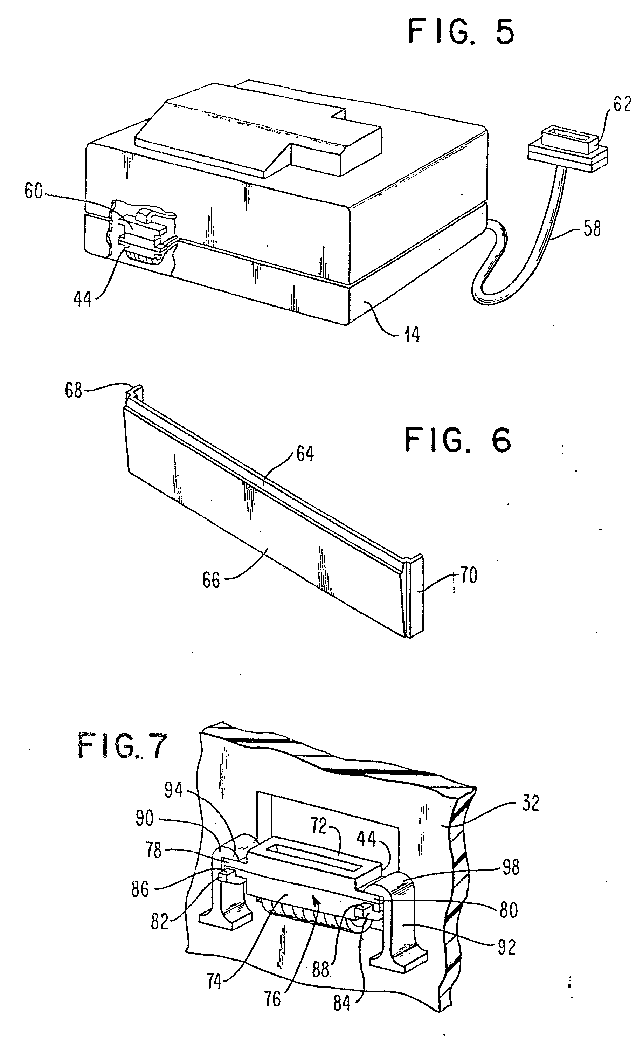

Lorsque tel est le cas, le clavier 10 semble faire partie intégrante du carter 12 ou à tout le moins être fixé au terminal. Il est néanmoins possible de passer à la deuxième configuration sans avoir à utiliser d'outils. La marche à suivre en pareil cas est l'inverse de celle décrite ci-dessus : après avoir retiré le châssis 16 de la base 14, on soulève le clavier 10 de manière à retirer le connecteur mâle 56 que comporte le clavier du connecteur femelle 44 que comporte la base. Comme le montre la figure 5, chaque extrémité du câble auxiliaire 58 est pourvue d'un connecteur qui est le complément de celui que comporte la base 14 ou le clavier 10. Un connecteur mâle 60 est directement inséré dans le connecteur 44 de la base. Le câble 58 traverse de préférence le carter 12 du terminal et en sort par un point (non représenté) situé dans la partie inférieure ou dans la partie arrière du carter. Le câble 58 est ensuite dirigé vers l'emplacement désiré du clavier 10. L'extrémité libre du câble 58 est pourvue d'un connecteur femelle 62 dans lequel le connecteur mâle 56 du clavier 10 vient se bloquer au moyen d'un mécanisme ·de verrouillage approprié. La partie en retrait 24 est ensuite recouverte d'un cache 64 représenté en perspective sur la figure 6. Ce cache comprend un panneau central 66, qui épouse la forme de la paroi extérieure de la base 14, ainsi que des éléments 68 et 70 en forme de L respectivement situés à ses extrémités gauche et droite et que l'on insère dans les éléments de guidage qui se trouvent aux extrémités opposées de la partie en retrait 24 que comporte la base. Une fois mise en place, le cache 64 masque la partie en retrait et permet d'obtenir une surface continue, ainsi qu'on peut le voir sur la figure 5. Le cache 64 étant maintenu en place par la configuration de la base 14 et par le châssis 16, aucun dispositif supplémentaire de fixation n'est requis.

Ainsi qu'on l'a précédemment mentionné, le connecteur électrique 44 de la base peut se déplacer librement dans certaines limites afin de compenser tout défaut d'alignement entre ce connecteur et le connecteur 56 que comporte le clavier 10. Les détails d'un agencement permettant d'obtenir ce résultat sont représentés sur la figure 7. Le connecteur 44 comprend de préférence une partie supérieure de forme rectangulaire 72, une partie inférieure analogue 74 et une partie centrale plus longue 76 comportant des prolongements 78 et 80. Ces derniers se trouvent dans des évidements de grandes dimensions pratiqués dans des éléments en porte-à-faux 82 et 84 faisant partie intégrante de la base 14 et servant de supports. Ces évidements sont partiellement définis par des éléments 86 et 88 qui s'étendent vers le haut et qui limitent le mouvement horizontal du connecteur 44 par rapport à la paroi intérieure 32. Le mouvement vers le haut du connecteur 44 est d'autre part limité par les extrémités supérieures arrondies et en forme de crochet 94 et 98 que comportent respectivement les bras 90 et 92, les extrémités 94 et 98 se trouvant au-dessus des surfaces supérieures des prolongements 78 et 80 du connecteur 44. Les bras 90 et 92 sont réalisés par moulage et constitués par un matériau présentant une élasticité suffisante pour qu'ils puissent s'écarter lors de l'insertion du connecteur 44 et revenir ensuite en place de manière à empêcher le mouvement vertical de ce connecteur.

· Il ressort de ce qui précède que, selon la configuration choisie du terminal, le clavier peut être soit fixé à la base du terminal, soit connecté électriquement à cette dernière par l'intermédiaire d'un câble auxiliaire. Le passage à cette dernière configuration peut être effectué sans outil dans les locaux du client en soulevant simplement le clavier pour le retirer de la base après avoir ôté le châssis du terminal, en insérant l'une des extrémités du câble auxiliaire dans le connecteur que comporte la base, en dirigeant le câble au travers du carter du terminal jusqu'à un point de sortie désiré situé dans la partie inférieure ou arrière du carter, et en insérant le connecteur situé à l'extrémité opposée du câble auxiliaire dans le connecteur associé au clavier. Enfin, on met en place le cache et on remet le châssis 16 dans sa position initiale.

La présente invention offre d'autres avantages évidents. La fixation initiale du clavier sur la base du terminal ne nécessite aucun outil puisque les éléments de guidage complémentaires que comportent la base et le clavier assurent l'alignement et le maintien de ce dernier. Une connexion électrique est automatiquement établie lors de la mise en place du clavier. Par ailleurs, le fait qu'une même base et qu'un même clavier puissent être utilisés dans les deux configurations précitées permet de réaliser une économie substantielle puisqu'il n'y a pas lieu d'employer des ensembles distincts de pièces de rechange, d'assurer la maintenance de composants distincts, etc.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

**Revendications**

1. Terminal d'entrée de données dont une première configuration dans laquelle les différents composants du terminal sont groupés, peut être aisément convertie en une seconde configuration dans laquelle lesdits composants sont physiquement séparés les uns des autres, ledit terminal étant caractérisé en ce qu'il comprend :

un clavier monté dans un boîtier comportant sur sa surface extérieure des éléments de guidage (46, 52 et 48, 54) et un connecteur électrique (56) relié aux circuits électriques associés au clavier, lesdits circuits électriques permettant de transmettre des signaux correspondant à des données introduites au moyen des touches, et

une base (14) comportant des éléments de guidage (34, 36 et 40, 42) complémentaires de ceux dudit clavier (10) et des circuits électriques se terminant par un connecteur électrique (44 ou 62) complémentaire de celui dudit clavier,

ledit clavier (10) pouvant être, dans le cas de ladite première configuration, fixé à ladite base (14) au moyen desdits éléments de guidage mutuellement complémentaires, lesdits connecteurs (56 et 44) se trouvant directement en contact l'un avec l'autre, ou, dans le cas de ladite seconde configuration, séparé de ladite base, lesdits connecteurs (56 et 62) étant alors couplés électriquement par l'intermédiaire d'un câble auxiliaire (58).

2. Terminal selon la revendication 1, caractérisé en ce que, pour fixer ledit clavier (10) dans le cas de ladite première configuration, ladite base (14) comprend également dans sa paroi avant un évidement (24) de forme rectangulaire défini par des bords qui, à ses extrémités opposées, s'étendent vers l'intérieur à partir de la surface extérieure de la paroi.

3. Terminal selon la revendication 2, caractérisé en ce que les éléments de guidage de ladite base comprennent une première (36) et une seconde (42) nervures au bord des extrémités opposées de l'évidement (24) de ladite base, lesdites nervures se trouvant à une distance prédéterminée de la paroi intérieure (32) dudit évidement, et en ce que les éléments de guidage dudit clavier (10) comprennent un premier (46) et un second (48) évidements pratiqués dans ses parois latérales, lesdits évidements pouvant être alignés avec lesdites nervures de manière à permettre au clavier d'être mis en place sur ladite base pour les besoins de ladite première configuration.

4. Terminal selon la revendication 2, caractérisé en ce qu'un cache amovible (64) est utilisé pour masquer l'évidement (24) que comporte ladite base (14) dans le cas de ladite seconde configuration, ledit cache comportant un panneau central (66) dont les bords des parois latérales sont pourvus d'éléments de guidage (68, 70) présentant la même configuration que ceux dudit clavier (10).

5. Terminal selon la revendication 3, caractérisé en ce que le connecteur (44) de ladite base (14) s'étend vers le haut à l'intérieur dudit évidement à une distance prédéterminée d'une paroi latérale de ce dernier, cependant que le connecteur (56) dudit clavier (10) s'étend vers le bas sur une paroi arrière dudit clavier (10) à la même distance prédéterminée de la paroi latérale correspondante du clavier, lesdits connecteurs étant couplés lorsque ledit clavier (10) est mis en place sur ladite base au moyen desdits éléments de guidage mutuellement complémentaires.

6. Terminal selon la revendication 5, caractérisé en ce qu'il comprend en outre des moyens (78, 80, 82, 84) permettant de monter le connecteur (44) de ladite base de telle sorte qu'il puisse faire l'objet d'un mouvement limité par rapport à cette dernière afin de faciliter le couplage des deux connecteurs lorsque ledit clavier (10) est mis en place sur ladite base dans le cas de ladite première configuration.

7. Terminal selon la revendication 5 ou 6 caractérisé en ce que le connecteur (44) de ladite base (14) comprend un connecteur femelle possédant une ouverture dirigée vers le haut cependant que le connecteur (56) dudit clavier (10) comprend un connecteur mâle dirigé vers le bas.

## Claims

1. A data input terminal which can be easily converted from a first configuration grouping the different terminal components into a second configuration in which said components are physically separated from each other, characterized in that it comprises :
   a keyboard mounted in a case bearing on its outer surface guide elements (46, 52 and 48, 54) and an electrical connector (56) coupled to the electrical circuitry associated with the keyboard, said electrical circuitry allowing signals corresponding to data entered via the keys to be transmitted, and
   a base (14) having guide elements (34, 36 and 40, 42) complementary to those of said keyboard (10) and electrical circuitry terminating in an electrical connector (44 or 62) which is complementary to that of said keyboard,
   said keyboard (10) being secured, in the case of said first configuration, to said base (14) by means of said complementary guide elements and said connectors (56 and 44) being in direct contact with each other, or separated from said base in the case of said second configuration, said connectors (56 and 62) being then electrically coupled through a auxiliary cable (58).

2. A terminal according to claim 1, characterized in that, in order to secure said keyboard (10) in the case of said first configuration, said base (14) further includes in its front wall a rectangular recess (24) defined by edges extending at its opposite ends inwardly from the outer surface of the wall.

3. A terminal according to claim 2, characterized in that the guide elements of said base comprise first (36) and second (42) ribs at the edge of the opposite ends of the recess (24) of said base, said ribs being spaced at a predetermined distance from the inner wall (32) of said recess, and the guide elements of said keyboard (10) comprise first (46) and second (48) recesses formed in the side walls, said recesses being alignable with said ribs so as to enable the keyboard to be guided into position on said base to meet the requirements of said first configuration.

4. A terminal according to claim 2, characterized in that a removable filler panel (64) is used to mask the recess (24) with which said base (14) is provided in the case of said second configuration, said filler panel including a central panel (66) the side wall edges of which being provided with guide elements (68, 70) having the same configuration as those of said keyboard (10).

5. A terminal according to claim 3, characterized in that the connector (44) of said base (14) extends upwardly within said recess at a predetermined distance from one side wall thereof, whereas the connector (56) of said keyboard (10) extends downwardly at a rear wall of said keyboard (10) at the same predetermined distance from the correponding side wall of the keyboard, said connectors being coupled when said keyboard (10) is positioned on said base by means of said complementary guide elements.

6. A terminal according to claim 5, characterized in that it further comprises means (78, 80, 82, 84) for mounting the connector (44) of said base so that it has a limited movement with relation thereto to facilitate coupling of the two connectors when said keyboard (10) is positioned on said base in the case of said first configuration.

7. A terminal according to claim 5 or 6, characterized in that the connector (44) of said base (14) comprises a female connector having an upwardly extending opening, whereas the connector (56) of said keyboard (10) comprises a downwardly extending male connector.

**Ansprüche**

1. Dateneingabeterminal, das von einer ersten Konfiguration, bei der die verschiedenen Bauelemente des Dateneingabeterminals mechanisch verbunden sind, leicht in eine zweite Konfiguration umgewandelt werden kann, in welcher diese Bauelemente voneinander getrennt angeordnet sind, dadurch gekennzeichnet, daß sie einschließt :
eine Tastatur, die in einem Gehäuse angeordnet ist, auf dessen Oberfläche Führungselemente (46, 52 und 48, 54) und ein mit den der Tastatur zugeordneten elektrischen Schaltungen verbundener elektrischer Anschluß (56) vorgesehen ist, wobei diese elektrischen Schaltungen zum Übertragen der Signale dienen, die den über die Tasten eingegebenen Daten entsprechen, und
ein Basisteil (14), welches die zur Tastatur (10) komplementären Führungselemente (34, 36 und 40, 42) und die elektrischen Schaltungen einschließt, die in einem zu dem der Tastatur komplementären elektrischen Anschluß (44 oder 62) enden,
wobei die Tastatur (10) im Falle der ersten Konfiguration mit Hilfe der komplementären Führungselemente an dem Basisteil (14) befestigt werden kann, und sich die Anschlüsse (56 und 44) in direktem Kontakt miteinander befinden, oder im Falle der zweiten Konfiguration von diesem Basisteil getrennt werden kann, und die Anschlüsse (56 und 62) dann durch ein zusätzliches Kabel (58) elektrisch gekoppelt sind.

2. Dateneingabeterminal nach Anspruch 1, dadurch gekennzeichnet, daß zur Befestigung der Tastatur (10) im Falle der ersten Konfiguration das Basisteil (14) weiterhin in seiner Vorderwand eine rechteckige Aussparung (24) aufweist, die durch Kanten definiert wird, die sich an ihren entgegengesetzten Enden von der äußeren Wandoberfläche aus einwärts erstrecken.

3. Dateneingabeterminal nach Anspruch 2, dadurch gekennzeichnet, daß die Führungselemente des Basisteils eine erste (36) und zweite (42) Rippe an den entgegengesetzten Enden der Aussparung (24) des Basisteils aufweisen, wobei sich die Rippen in einem vorbestimmten Abstand von der Innenwand (32) der Aussparung befinden, und daß die Führungselemente der Tastatur (10) erste (46) und zweite (48) in den Seitenwänden eingelassene Aussparungen aufweisen, wobei diese Aussparungen mit diesen Rippen so ausgerichtet werden können, daß die Tastatur für die erste Konfiguration auf dem Basisteil befestigt werden kann.

4. Dateneingabeterminal nach Anspruch 2, dadurch gekennzeichnet, daß eine abnehmbare Deckplatte (64) dazu dient, die im Basisteil (14) enthaltene Aussparung (24) im Falle der zweiten Konfiguration zu verdecken, wobei diese Deckplatte eine Mittelplatte (66) einschließt, deren Seitenwandränder mit Führungselementen (68, 70) versehen sind, die den Führungselementen der Tastatur (10) entsprechen.

5. Dateneingabeterminal nach Anspruch 3, dadurch gekennzeichnet, daß der Anschluß (44) des Basisteils (14) sich im Innern der Aussparung in einem vorbestimmten Abstand von einer Seitenwand davon aufwärts erstreckt, während der Anschluß (56) der Tastatur (10) sich an einer Rückwand der Tastatur (10) im gleichen vorbestimmten Abstand von der entsprechenden Seitenwand der Tastatur abwärts erstreckt, wobei die Anschlüsse gekuppelt werden, wenn die Tastatur (10) mit Hilfe der komplementären Führungselemente auf der Basis in Stellung gebracht wird.

6. Dateneingabeterminal nach Anspruch 5, dadurch gekennzeichnet, daß sie außerdem Mittel (78, 80, 82, 84) einschließt, die dazu dienen, den Anschluß (44) des Basisteils in der Weise anzubringen, daß er eine beschränkte Bewegung zuläßt, um die Verbindung der zwei Anschlüsse zu erleichtern, wenn die Tastatur im Falle der ersten Konfiguration mit diesem Basisteil verbunden wird.

7. Dateneingabeterminal nach Anspruch 5 oder 6, dadurch gekennzeichnet, daß der Anschluß (44) des Basisteils (14) einen Buchsenanschluß einschließt, der eine aufwärtsgerichtete Öffnung besitzt, während der Anschluß (56) der Tastatur (10) einen abwärtsgerichteten Steckanschluß besitzt.

# FIG. 1

# FIG. 2

23 34 18 36 38 44 32 24 40 30 42 26 14

# FIG. 3

52 46 50 54 48 10

# FIG. 4

54 50 52 56

FIG. 5

FIG. 6

FIG.7

3